Europäisches Patentamt

European Patent Office

Office européen des brevets

(19)

(11) Numéro de publication: **0 363 542**
**A1**

(12) # DEMANDE DE BREVET EUROPEEN

(21) Numéro de dépôt: **88402574.3**

(22) Date de dépôt: **11.10.88**

(51) Int. Cl.⁵: **G01B 11/24**

(43) Date de publication de la demande:
**18.04.90 Bulletin 90/16**

(84) Etats contractants désignés:
**AT BE CH DE ES GB IT LI LU NL SE**

(71) Demandeur: **TELSA INFORMATIQUE Société Anonyme**
**9 Boulevard Jean Jaurès**
**F-92100 Boulogne(FR)**

(72) Inventeur: **Evain, Bernard**
**Chemin d'Houjarray**
**F-78490 Bazoches/Guyonne(FR)**
Inventeur: **Olivier, Guy**
**12 Rue Louise Michel**
**F-78800 Houilles(FR)**
Inventeur: **Pedron, Yvon**
**10 Rue du Dr Finlay**
**F-75015 Paris(FR)**

(74) Mandataire: **Bruder, Michel**
**10 rue de la Pépinière**
**F-75008 Paris(FR)**

(54) **Procédé et appareil de vidéogrammétrie.**

(57) La présente invention concerne un procédé et un appareil de vidéogrammétrie, c'est-à-dire d'acquisition de données numériques relatives aux coordonnées des différents points de la surface d'un objet à trois dimensions.

Cet appareil est caractérisé en ce qu'il comporte plusieurs paires d'émetteurs laser (1-4;1a-4a) produisant respectivement des faisceaux laser (f1-f4), ces émetteurs laser étant répartis par paires d'émetteurs produisant des paires de faisceaux coplanaires projetés sur la surface d'un objet (5) à analyser, plusieurs caméras vidéo (A,B C,D) dirigées vers l'objet (5) et des moyens (7,9,11) pour provoquer un déplacement relatif entre l'objet (5) et l'ensemble des paires d'émetteurs laser (1-4;1a-4a).

Fig. 1

La présente invention concerne un procédé et un appareil de vidéogrammétrie c est à dire d acquisition de données numériques relatives aux coordonnées des diffé rents points de la surface d un objet à trois dimensions

La vidéogrammétrie est un procédé connu de saisie tridimensionnelle d informations relatives aux divers points de la surface d un objet Cette saisie est généralement réalisée en éclairant l'objet au moyen d un faisceau lumi neux plan ou lamellaire émis par un émetteur de faisceau laser de manière à former sur la surface de l objet à son intersection avec le faisceau lumineux lamellaire une courbe de niveau lumineuse Des caméras vidéo disposées d une manière appropriée de part et d autre de l objet sont prévues pour capter l image lumineuse formée sur l objet suivant la courbe de niveau et des moyens sont prévus pour traduire les deux images captées respectivement par les caméras vidéo en signaux numériques qui après un traite ment approprié, permettent d obtenir les valeurs numériques des coordonnées des différents points constituant la courbe de niveau après les correc tions imposées par la disposition des caméras Chaque courbe de niveau se traduit par consé quent par un ensemble de données numériques qui sont ensuite stockées dans une mémoire d un ordinateur en vue d une uti lisation ultérieure Une fois la mesure effectuée pour une courbe de niveau déterminée on effectue un déplacement relatif en tre l objet et le faisceau lumineux lamellaire sur une faible distance correspondant à un pas élé mentaire et on recommence l analyse de la nouvel le courbe de niveau obtenue. On peut ainsi enre gistrer en mémoire des valeurs numériques suc cessives correspondant aux courbes de niveaux successives obtenues par le déplacement relatif pas à pas entre le faisceau lumineux lamellaire fourni par le ou les émetteurs lasers et l objet.

La présente invention concerne des perfection nements apportés à un tel procédé et à un tel appareil dans le but d accroitre la rapidité de l acquisition numérique d élimi ner dans la mesure du possible les zones cachées et d obtenir une définition élevée et éventuellement modulable

A cet effet ce procédé de vidéogrammétrie dans lequel on projette sur l objet un faisceau lumineux de manière à former à l intersection de ce faisceau et de la surface de l objet, une succes sion de points lumineux répar tis suivant une cour be de niveau on capte ces points lumi neux au moyen d au moins une caméra vidéo on analyse l'image vidéo ainsi obtenue en la transformant en informations numériques correspondant aux coor données des divers points lumineux de chaque courbe de niveau puis on effectue un déplacement relatif entre l'objet et le faisceau lumineux d'une distance ou pas élémentaire, pour recommen ces le cycle des opérations de mesure sur la nouvelle courbe de niveau obtenue, est caractérisé en ce qu on projette simultanément sur l objet plusieurs fais ceaux lumineux de manière à former plusieurs courbes de niveau différentes aux intersections des divers faisceaux avec la surface de l objet on analyse simultanément l ensemble des courbes de niveau formées au moyen des caméras vidéo et après chaque analyse d un groupe de courbes de niveau formées en procède à un déplacement si multané d un pas élémentaire inférieur à l espace ment entre les faisceaux de tous les faisceaux lumineux pour former un nouveau groupe de cour bes de niveau voisines des courbes du groupe précédent, après quoi on reprend le cycle d analy se de ces nouvelles courbes et ainsi de suite.

On peut projeter sur l objet soit des faisceaux lumineux ponctuels effectuant un balayage dans un plan soit encore des faisceaux lumineux lamellaires parallèles ou se recoupant suivant une meme droi te. Si les faisceaux lumineux sont des faisceaux lamellaires parallèles ou des faisceaux ponctuels se déplaçant dans des plans parallèles, on les déplace simultanément ou on déplace l objet, les faisceaux restant fixes, en translation dans une direction perpendi culaire à leurs plans. L'espace ment des plans contenant les faisceaux lumineux peut etre uniforme ou encore varia ble d'un fais ceau à l'autre.

Dans le cas où les faisceaux lumineux sont des faisceaux lamellaires se recoupant suivant une droite ou des faisceaux ponctuels se déplaçant dans des plans se recoupant suivant une droite on déplace l ensemble des faisceaux ou l'objet en rotation autour de cette droite. Dans ce cas les angles formés par les plans des différents fais ceaux lumineux entre eux peuvent être uniformes ou encore variables d'un faisceau à l'autre.

L invention a également pour objet un appareil de vidéogrammétrie caractérisé en ce que il com porte plusieurs paires d émetteurs laser produisant des faisceaux laser ces émetteurs laser étant ré partis par paires d émetteurs produisant des paires de faisceaux coplanaires projetés sur la surface d un objet à analyser, plusieurs caméras vidéo diri gées vers l'objet pour capter les points lumi neux de courbes de niveau formées aux intersections des divers faisceaux laser avec la surface de l'objet et des moyens pour provoquer un déplacement relatif entre l'objet et l'ensemble des paires d'émet teurs laser

Le procédé et l'appareil suivant l invention per mettent, du fait de la grande rapidité d acquisition des données numériques, de les utiliser dans le cadre de processus industriels où le temps d'im mobilisation est nécessairement limité, ou bien en core dans le cas de l acquisi tion de caractéristi ques morphologiques humaines où un long temps de pose ajoute à l inconfort le risque d erreurs dues à des mouvements involontaires. Ils peuvent être appliqués au relevé d'objets de formes complexes du fait de l'élimina tion de la plus grande partie ou de la totalité des zones cachées. Enfin l appareil suivant l'invention a une défini tion élevée et modulable qui permet d'obtenir un grand nombre de points dans certaines zones et un nombre de points plus faible ailleurs.

On décrira ci après à titre d'exemples non limitatifs, diverses formes d exécution de la présente invention, en référence au dessin annexé sur lequel

La figure 1 est un schéma synoptique d un appareil de vidéogrammétrie suivant l'invention.

La figure 2 est une vue de profil schématique de l appareil de la figure 1.

La figure 3 est une vue en plan schématique d'une variante d'exécution de l appareil de vidéogrammétrie.

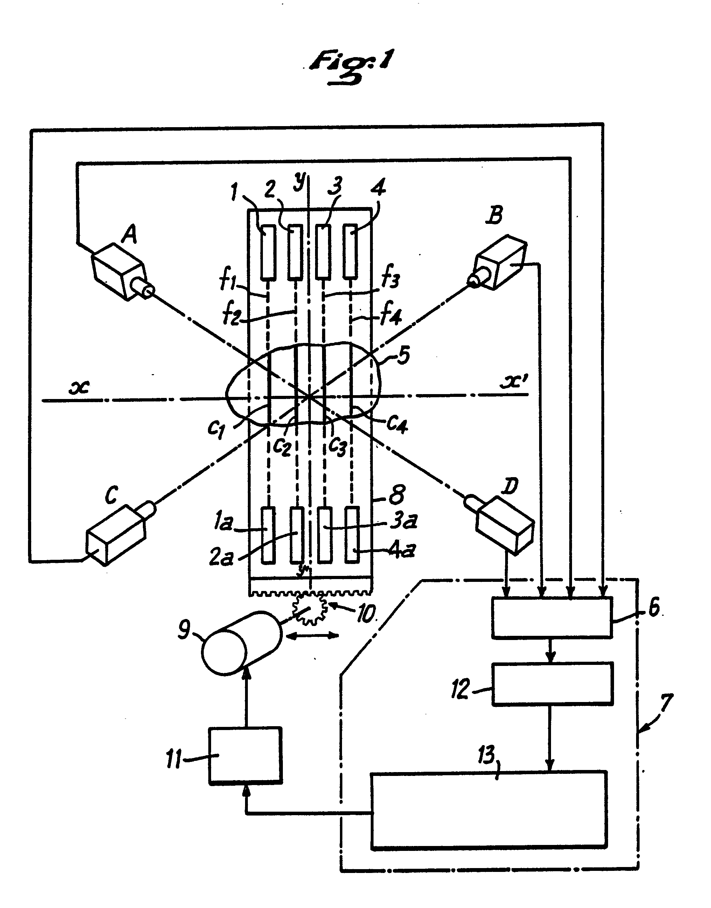

L'appareil de vidéogrammétrie suivant l'invention qui est représenté sur la figure 1, comprend plusieurs paires d'émetteurs de faisceaux laser par exemple quatre émetteurs supérieurs 1,2,3,4 et quatre émetteurs inférieurs 1a,2a,3a,4a. Tous ces émetteurs de faisceaux laser sont situés d'un même côté d'un objet 5 dont la surface doit être mesurée et ils sont dirigés vers cet objet. Les émetteurs supérieurs 1,2 3,4 sont respectivement symétriques des émetteurs inférieurs 1a 2a,3a,4a, par rapport à un plan horizontal xx qui passe sensiblement par le centre de l'objet 5. Les deux émetteurs supérieur et inférieur de chaque paire sont disposés dans un même plan vertical et ces deux émetteurs produisent ainsi des faisceaux laser lamellaires contenus dans ce même plan vertical. Ainsi les deux émetteurs 1,1a émettent chacun un faisceau laser lamellaire qui est situé dans un plan vertical perpendiculaire au plan de la feuille de dessin et de la même façon les paires d émetteurs 2,2a;3,3a;4,4a émettent respectivement des fais ceaux laser lamellaires $f_2, f_3$, et $f_4$ situés dans des plans verticaux parallèles. Les faisceaux laser lamellaires verti caux $f_1$-$f_4$ produisent respectivement à leurs intersections avec la surface de l'objet 5, des courbes de niveaux $c_1, c_2, c_3, c_4$ qui sont de ce fait contenues dans des plans verticaux parallèles.

Suivant une variante chaque émetteur laser produit un faisceau laser ponctuel et des moyens sont prévus pour provoquer un mouvement de balayage très rapide de ce faisceau laser dans le plan vertical passnt par l émetteur.

Toutes les courbes de niveau $c_1$-$c_4$ sont "lues" simultanément par un ensemble de quatre caméras vidéo A,B,C,D qui sont disposées symétriquement deux à deux par rapport au plan horizontal xx' et au plan vertical yy' parallèle aux plans des faisceaux laser $f_1$-$f_4$. Autrement dit chacune

des caméras vidéo A,B,C,D, émet à sa sortie un signal analogique qui correspond à l'analyse des quatre courbes de niveau verticales $c_1, c_2, c_3, c_4$ vues sous l'angle propre de la caméra considérée.

De préférence l'axe de chacune des caméras vidéo A B,C,D fait un angle environ 30o avec le plan horizontal xx' et de 45o avec le plan vertical yy'

Les images prises par les quatre caméras vidéo A-D sont numérisées en temps réel et stockées telles quelles dans les plans images d'une ou plusieurs cartes vision 6 placées dans un ordinateur 7 qui pilote l'ensemble des opérations.

Par ailleurs l'ensemble des émetteurs laser 1 4 et 1a 4a est monté sur un support 8 qui est mobile dans une direction perpendiculaire au plan vertical yy' c'est-à-dire à celui des différents faisceaux laser lamellaires. Le déplacement de l'ensemble des émetteurs de faisceaux laser peut être commandé par tous moyens appropriés, par exemple par un moteur électrique 9 qui est accouplé au support 8 par l'intermédiaire d'un mécanisme de transmission approprié 10. Ce moteur 9 est lui même relié à un circuit d'alimentation 11 qui est connecté à l'ordinateur 7 Le déplacement de l'ensemble des émetteurs de faisceaux laser peut être effectué en translation. Toutefois, compte tenu de la faible amplitude de la translation nécessaire, qui est inférieure à l espacement entre deux faisceaux laser consécutifs, on peut généralement remplacer cette translation par une rotation, l'erreur ainsi introduite étant faible. Par exemple pour des faisceaux laser espacés les uns des autres de 20mm et des émetteurs laser placés à deux mètre de l'objet 5, l'angle de rotation est inférieur à 0,6 degré.

Le fonctionnement de l'appareil qui vient d'être décrit est le suivant au départ le calculateur 7 commande la mise en position initiale des émetteurs laser en provoquant le déplacement du support 8 par l'intermédiaire du moteur électrique 9. Lorsque la position de départ est atteinte, une prise de vue est effectuée simultanément par chacune des quatre caméras vidéo A B,C,D qui relèvent les quatre courbes de niveau $c_1, c_2, c_3, c_4$ et qui fournissent des signaux correspondants à l'ordinateur 7 Une fois cette prise de vue effectuée, l'ordinateur commande une translation de l'ensemble mobile portant les émetteurs laser sur une distance ou pas élémentaire et il attend que cette translation soit terminée et que les émetteurs laser soient stabilisés avant d'effectuer une nouvelle prise de vue et ainsi de suite.

Ainsi chaque prise de vue se traduit par la saisie d'un certain nombre de données numériques correspondant aux quatre courbes de niveau $c_1$-$c_4$ vues par chacune des quatre caméras vidéo A-D. Ce processus se poursuit jusqu'à la fin de l'acquisition. La durée de cette acquisition dépend du nombre de prises de vue, c'est-à-dire de la quantité d'informations nécessaires et de la vitesse de translation et de stabilisation des émetteurs laser.

A la fin de l'acquisition toutes les images mises sous formes de signaux numériques sont transférées à partir des cartes vision 6 dans la mémoire 12 de l'ordinateur 7 et celui-ci effectue, dans son circuit de traitement central 13, les traitements appropriés tels que binarisation, extraction des courbes, traitement des discontinuités, corrections géométriques et corrélations entre courbes correspondantes obtenues par les différentes caméras. Ce traitement permet alors d'obtenir les courbes de niveaux réelles de la surface de l'objet 5, courbes qui peuvent être alors utilisées pour diverses applications, notamment pour la reproduction de la surface de l'objet 5.

Avec une caméra vidéo de 512 x 512 pixels et une carte de mémoire 1Mo on peut stocker jusqu'à 8 images comportant seize niveaux de gris. Sur la plupart des objets il est possible de traiter dix faisceaux lumineux lamellaires, ce qui permet d'avoir 80 courbes de niveau soit 40000 points utiles après traitement. Il est possible d'effectuer une telle acquisition en deux à trois secondes même en utilisant plusieurs caméras et cartes vision.

Il est préférable d'effectuer les prises de vues dans l'obscurité mais il est possible de travailler en lumière ambiante, en utilisant des filtres interférentiels. Il est également possible de travailler en ambiance lumineuse contrôlée, avec éventuellement de simples filtres colorés.

L'espacement entre les faisceaux laser lamellaires f1,f2,f3,f4 etc peut être uniforme ou variable. Dans ce cas on peut faire en sorte que l'espacement soit plus faible, c'est-à-dire que les faisceaux soient plus rapprochés les uns des autres dans les régions où une définition plus importante est souhaitée.

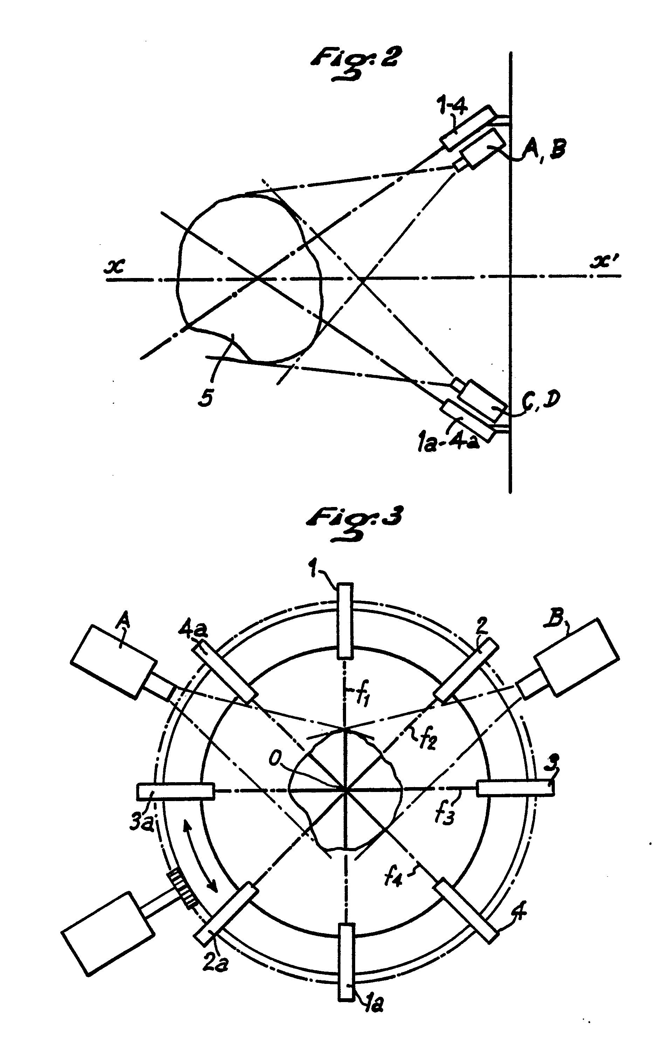

Dans la variante d'exécution de l'invention représentée sur la figure 3, les faisceaux laser lamellaires f1,f2,f3,f4 se recoupent suivant une même droite verticale (ou horizontale) 0 et de ce fait les émetteurs de faisceaux laser 1-4 et 1a-4a sont disposés horizontalement et radialement, par paires d'émetteurs opposés diamétralement. Les faisceaux laser lamellaires f1-f4 forment entre eux des angles, d'une valeur de 45o dans le cas où il y a quatre faisceaux laser et où l'espacement des faisceaux laser est uniforme, et les moyens prévus pour assurer le déplacement relatif entre l'objet 5 et l'ensemble des faisceaux ou émetteurs laser provoquent un mouvement de rotation autour de l'axe vertical 0. Ce déplacement en rotation s'effectue, comme dans le cas précédant, suivant des pas angulaires de valeur inférieure à l'angle formé par deux faisceaux laser voisins. Là encore cet angle peut être uniforme ou encore variable, suivant la définition que l'on désire obtenir.

## Revendications

1.- Procédé de vidéogrammétrie, dans lequel on projette, sur un objet (5), des faisceaux lumineux lamellaires (f1-f4) provenant d'émetteurs (1-4, 1a 4a) manière à former, à l'intersection de ces faisceaux avec la surface de l'objet (5), des successions de points lumineux constituant des courbes de niveau (c1-c4), on capte ces courbes de niveau, au moyen de caméras vidéo (A,B,C,D), pour obtenir des images de ces courbes de niveau, on analyse chaque image vidéo ainsi obtenue en la transformant en informations numériques correspondant aux coordonnées des divers points lumineux de chaque courbe de niveau, puis on effectue un déplacement relatif entre l'objet (5) et les faisceaux lumineux lamellaires (f1-f4) en recommençant le cycle des opérations d'analyse sur chaque courbe de niveau obtenue, caractérisé en ce qu'on analyse simultanément l'ensemble des courbes de niveau (c1-c4) d'un groupe et après chaque analyse d'un groupe de courbes de niveau (c1-c4), on effectue une translation ou une rotation relative entre l'objet et l'ensemble des faisceaux lumineux lamellaires (f1-f4) simultanément, d'un pas élémentaire inférieur à l'espacement entre les courbes des faisceaux lumineux d'un même groupe, pour former et analyser un nouveau groupe de courbes de niveau, voisin des courbes précédentes.

2.- Procédé suivant la revendication 1 caractérisé en ce qu'on groupe les faisceaux lumineux (f1-f4) par paires de faisceaux comprenant chacune un faisceau supérieur et un faisceau inférieur, afin d'obtenir un groupe de courbes de niveau (c1-c4), contenues dans des plans verticaux parallèles ou se recoupant suivant une droite, en nombre égal au nombre de paires de faisceaux lumineux

3.- Procédé suivant l'une quelconque des revendications précédentes caractérisé en ce que les espacements des faisceaux lumineux parallèles lamellaires (f1-f4) ou de leurs plans de balayage parallèles ou les angles formés par les différents faisceaux lumineux lamellaires ou par leurs plans de balayage entre eux sont variables d'un faisceau à l'autre.

4.- Appareil de vidéogrammétrie pour la mise en oeuvre du procédé selon l'une quelconque des revendications 1 à 3 caractérisé en ce qu'il comporte plusieurs émetteurs (1 4,1a-4a) groupés par paires comprenant chacune un émetteur supérieur (1-4) et un émetteur inférieur (1a-4a), produisant les paires de faisceaux (f1-f4) coplanaires.

5.- Appareil suivant la revendication 4 caractérisé en ce que quatre caméras vidéo (A,B,C,D) lisent chacune, simultanément, toutes les courbes de niveau (c1-c4) d'un même groupe.

6.- Appareil suivant l'une quelconque des revendications 4 et 4 caractérisé en ce que l'axe de chacune des caméras vidéo (A,B,C,D) fait un angle d'environ 30o avec le plan horizontal et d'environ 45o avec le plan vertical.

7.- Appareil suivant l'une quelconque des revendications 4 à 6 caractérisé en ce que la translation ou la rotation relative entre l'objet (5) et l'ensemble des faisceaux lumineux lamellaires (f1-f4) s'effectue simultanément, d'un pas élémentaire inférieur à l'espacement entre les courbes de niveau (c1-c4).

*Fig.1*

*Fig. 2*

*Fig. 3*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.3) |
|---|---|---|---|
| X | US-A-4 269 513 (P.L. DIMATTEO) <br> * Titre; figures 1-7; colonne 3, ligne 4 - colonne 7, ligne 11 * <br> --- | 1-5 | G 01 B 11/24 |
| X | FR-A-2 363 778 (BETRIEBSFORSCHUNGSINSTITUT VDEH INSTITUT FÜR ANGEWANDTE FORSCHUNG GmbH) <br> * Titre; figures 1,2; page 4, ligne 17 - page 6, ligne 2 * <br> --- | 1-5 | |
| X | EP-A-0 222 498 (LOUGHBOROUGH CONSULTANTS LTD) <br> * Figures 1,2; titre; colonne 4, ligne 19 - colonne 7, ligne 22 * <br> --- | 1-7 | |
| A | FR-A-2 292 213 (COMPAGNIE ELECTROMECANIQUE ET CENTRE TECHNIQUE DES INDUSTRIES MECANIQUES) <br> * Figures 1-7; page 2, ligne 33 - page 9, ligne 37; page 11, ligne 19 - page 13, ligne 28 * <br> ----- | 1,5-7 | |

**DOMAINES TECHNIQUES RECHERCHES (Int. Cl.3)**

G 01 B

Le présent rapport a été établi pour toutes les revendications

| Lieu de la recherche | Date d'achèvement de la recherche | Examinateur |
|---|---|---|
| LA HAYE | 07-06-1989 | VISSER F.P.C. |